# EUROPEAN PATENT SPECIFICATION

(11) **EP 2 758 209 B1**
(45) Date of publication and mention of the grant of the patent: **23.11.2016**
(21) Application number: 12759095.8
(22) Date of filing: 11.09.2012
(51) Int. Cl.: B23Q 7/04, B23Q 39/02

(54) **MACHINE WITH WORKING HEADS FOR WORKING METALLIC PROFILES**
MASCHINE MIT ARBEITSKÖPFEN ZUM BEARBEITEN VON METALLPROFILEN
MACHINE COMPRENANT DES TÊTES DE TRAVAIL POUR LE TRAVAIL DE PROFILÉS MÉTALLIQUES

(30) Priority: 19.09.2011 IT MI20111685
(43) Date of publication of application: 30.07.2014
(73) Proprietor: FICEP S.P.A., 21045 Gazzada Schianno (VA) (IT)
(72) Inventor: COLOMBO, Christian, 20145 Milano (IT); VARINI, Renzo, 20029 Turbigo (IT)
(74) Representative: Modiano, Micaela Nadia
(86) International application number: PCT/EP2012/067702
(87) International publication number: WO 2013/041405

(56) References cited:
- DE-A1- 3 823 635
- DE-A1- 4 023 125
- DE-A1- 19 725 043
- DE-U1-202010 008 902
- US-A- 3 094 015
- US-A- 3 685 915

## Description

The present invention relates to a machine with working heads for working three-dimensional metallic profiles.

Nowadays machine tools are known for performing drilling, reaming, turning, writing, milling and tapping which make use of one or more working heads that are designed to work three-dimensional metallic profiles.

Conventional working heads, particularly of the type for digitally controlled machines, generally comprise a mandrel, for mounting a tool, which is moved and positioned, and conveniently advanced, for proceeding with the working of the metallic profile.

Such conventional machines are not devoid of drawbacks, including the fact that they offer low speeds of working of three-dimensional metallic profiles.

Another drawback of such conventional machines consists in the fact that the complexity and dimensions of the holes that can be made in the metallic profiles are reduced.

Another drawback of such conventional machines consists in the fact that the working of three-dimensional metallic profiles requires the continuous repositioning of the profile within a limited workspace.

DE-19725043A1 discloses a machine according to the preamble of claim 1 and a method according to the preamble of claim 7.

The aim of the present invention is to provide a machine for working three-dimensional metallic profiles which solves the above problems and which overcomes the drawbacks and the limitations of the known art, making it possible to ensure high speeds of working of the metallic profile.

Within this aim, an object of the present invention is to provide a machine with working heads which is capable of working metallic profiles, performing operations that are complex and of large dimensions while reducing the necessity for continuous repositioning of the three-dimensional metallic profile.

Another object of the invention consists in providing a machine with working heads that is capable of offering the widest guarantees of reliability and safety of use.

Another object of the present invention consists in providing a machine with working heads that is easy to produce and economically competitive in comparison to the known art.

This aim and these and other objects which will become more evident hereinafter are achieved by a machine as defined in claim 1 and a method as defined in claim 7.

Further characteristics and advantages of the invention will become more apparent from the description of a preferred, but not exclusive, embodiment of a machine with working heads for working three-dimensional metallic profiles, illustrated by way of non-limiting example in the accompanying drawings wherein:
Figure 1 is a perspective view from above of an embodiment of a machine with working heads for working three-dimensional metallic profiles, according to the invention;

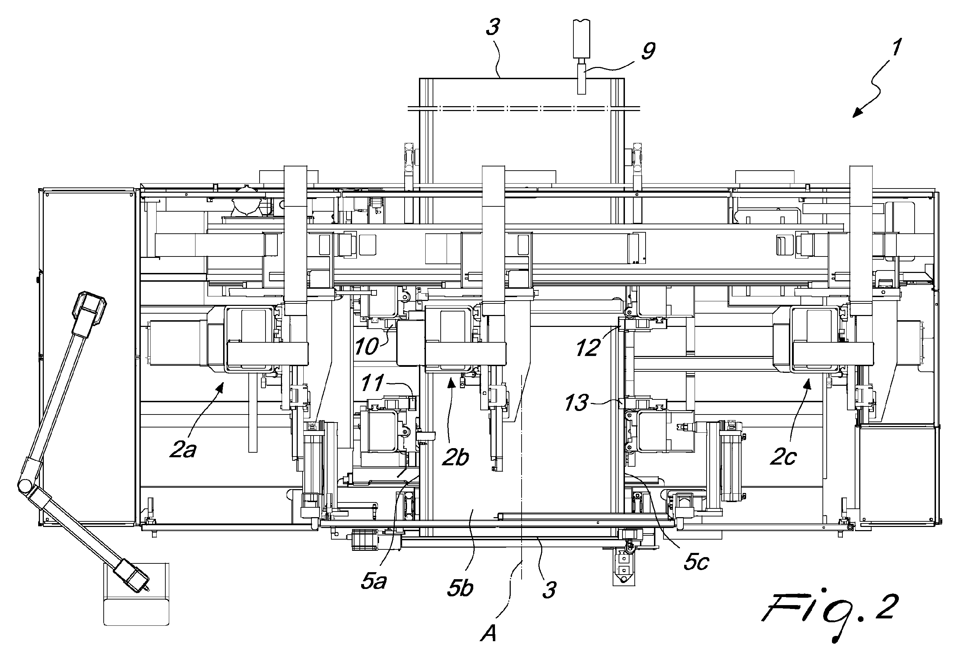

Figure 2 is a plan view from above of the machine with working heads shown in Figure 1.

With reference to the figures, the machine with working heads for working three-dimensional metallic profiles, generally designated by the reference numeral 1, comprises at least two working heads.

According to the invention, the machine 1 with working heads comprises a device for the simultaneous management of the movement of the working heads which is adapted to move each one of such heads independently and simultaneously for the respective working of a different surface of a three-dimensional metallic profile 3.

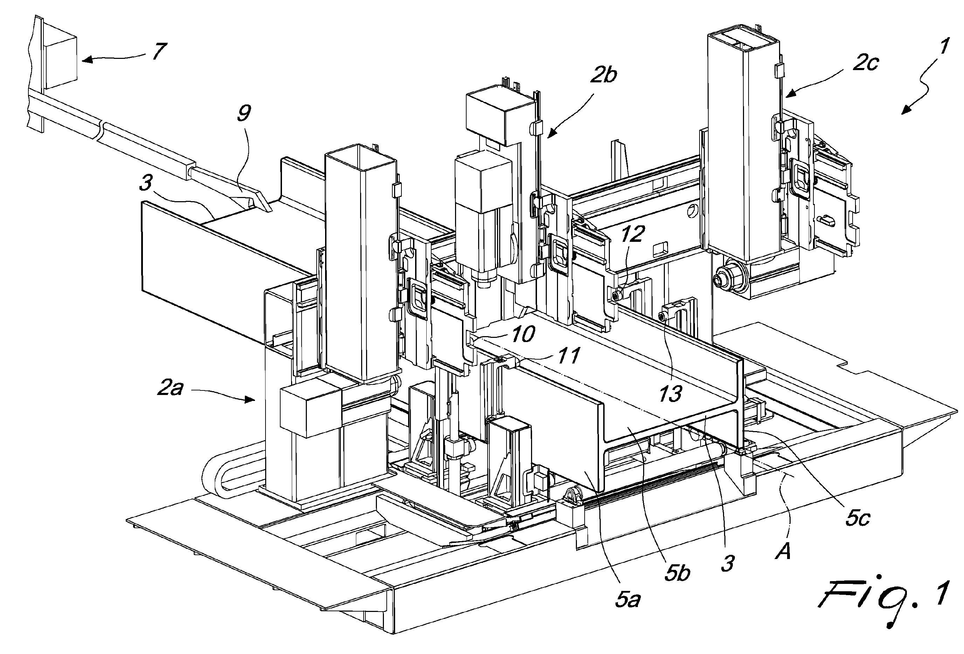

According to the embodiment shown in Figure 1, the machine 1 can comprise three working heads 2a, 2b and 2c. Each one of such working heads 2a, 2b and 2c is adapted to engage, respectively, a different surface 5a, 5b and 5c of the three-dimensional metallic profile 3.

The device for the simultaneous management of the movement of the heads 2a, 2b, 2c is adapted to simultaneously manage the movement of each one of the heads 2a, 2b, 2c with respect to at least one of three axes which are perpendicular to each other and form, for each head 2a, 2b and 2c, an intrinsic system of reference.

The three-dimensional metallic profile 3 advantageously has sections that are H-shaped, as illustrated by way of example in Figure 1, C-shaped, U-shaped, or have another shape which has a core and wings that are variously mutually inclined. The machine 1 is adapted to engage each one of the working heads with a different surface of the metallic profile, for the working thereof.

The machine 1 moreover comprises a device for the translational motion 7 of the three-dimensional metallic profile 3 along the longitudinal axis A of the metallic profile.

Such device for the translational motion 7 of the metallic profile 3 comprises advantageously a clamp 9 which engages the metallic profile 3, for example, as illustrated in Figure 1, by gripping the rear part of the metallic profile 3. The clamp 9 is adapted to be moved along a longitudinal axis that is parallel to, and preferably coincident with, the longitudinal axis A of the metallic profile 3.

Alternatively, in an embodiment of the machine 1 which is not shown in the accompanying figures, the device for translational motion 7 comprises motorized rollers that engage the metallic profile 3, for example by means of the friction force that is created between the lateral surface of the motorized rollers and at least one of the longitudinal surfaces of the metallic profile 3, thus determining the translational motion of the metallic profile 3 along its longitudinal axis A.

In the embodiment shown in the accompanying figures, the machine 1 comprises a plurality of vises with rollers 11, 12, 13, 14 which advantageously work at low pressure, and are adapted to stably grip the metallic profile 3, limiting its movement exclusively to one degree of freedom, i.e. to the translational motion along its longitudinal axis A.

The system of simultaneous management of the movement of the working heads 2a, 2b, 2c is also configured for the simultaneous management of the device for the translational motion 7 of the metallic profile 3 along its longitudinal axis A, where such translational motion of the metallic profile 3 is allowed by the vises with rollers 11, 12, 13, 14.

Advantageously the machine 1 can comprise devices for locking the metallic profile 3, preferably of the hydraulic locking type.

The device for the simultaneous management of the movement of the heads 2a, 2b, 2c is configured to translate the metallic profile 3, by means of such a device for translational motion 7, in discrete steps, after the heads 2a, 2b, 2c disengage from the respective working surfaces 5a, 5b, 5c of the metallic profile 3, consistently with the type of working to be executed on the metallic profile 3. The management device is also configured to actuate the devices for locking the metallic profile 3, after the working heads 2a, 2b, 2c re-engage the respective working surfaces 5a, 5b, 5c of the metallic profile 3.

Each one of the working heads 2a, 2b, 2c can comprise a tool which is selected from the group that comprises tools for drilling, for punching, for writing, for beveling and for milling. Therefore each head 2a, 2b, 2c can execute, in an independent and/or coordinated and simultaneous manner, by means of the simultaneous management device, a different working on a different surface 5a, 5b, 5c of the metallic profile 3, as a function of the mounted tool.

The method for working three-dimensional metallic profiles in the machine 1 with working heads is described below.

The metallic profile 3 is conveniently positioned, by means of the device for translational motion 7, so as to present the working surfaces 5a, 5b, 5c to the respective working heads 2a, 2b, 2c.

The system of simultaneous management of the movement of the working heads 2a, 2b and 2c simultaneously moves the working heads, with respect to the respective surface 5a, 5b and 5c to be worked of the metallic profile 3, each head 2a, 2b, 2c carrying the corresponding tool, which is thus actuated so as to execute a determined action on a determined surface of the metallic profile.

Such step of movement of the working heads can be preceded by a locking of the metallic profile 3, commanded by the management system, by means of the locking device, thus ensuring a stable locking under the brunt of working.

Once the working of a portion of the metallic profile 3 is complete, the machine 1 disengages the working heads 2a, 2b, 2c from the respective surfaces 5a, 5b, 5c, and the metallic profile is induced to translate, in discrete steps, along its own longitudinal axis to the subsequent position, by means of the device for translational motion 7, in a manner which is controlled by the device for the simultaneous management of the movement of the working heads, and the working operation can be resumed.

Alternatively, such step of movement of the working heads and of actuating the corresponding tools can occur simultaneously with the translational motion of the metallic profile 3, in accordance with the commands imparted by the system for simultaneous management, so that the working heads can operate on a larger surface of the metallic profile, where the tools of the working heads operate during the translational motion of the metallic profile.

In practice it has been found that the machine with working heads for working three-dimensional metallic profiles, according to the present invention, achieves the intended aim and objects by making it possible to manage several different forms of working, such as writing, punching, milling, helicoid milling and drilling, completely independently and simultaneously.

Another advantage of the machine with working heads, according to the invention, consists in working the metallic profile on differently oriented, different surfaces of the same metallic profile without having to reposition the profile within a preset workspace.

Another advantage of the machine with working heads, according to the invention, consists in the fact that it improves the speed of working and improves the quality of working.

Another advantage of the machine with working heads, according to the invention, consists in the fact that, since each working head can work along three axes that are perpendicular to each other, it is possible to create holes of larger diameters than the known art and in that it is possible to introduce more complex forms of working such as helicoid milling.

Another advantage of the machine with working heads, according to the invention, consists in the fact that combining the movement of the working heads in engagement with the metallic profile with the longitudinal translational motion thereof enables the working of the metallic profile on larger surfaces, in shorter times and with the possibility of more complex forms of working.

The machine with working heads, thus conceived, is susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. MI2011A001685 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) with working heads for working three-dimensional metallic profiles, comprising at least two working heads (2a, 2b, 2c),
a device for the simultaneous management of the movement of said heads (2a, 2b, 2c) which is adapted to move each one of said heads (2a, 2b, 2c) independently and simultaneously for the respective working of a different surface (5a, 5b, 5c) of said metallic profile (3) and
a device (7) for the translational motion of said metallic profile (3) along the longitudinal axis (A) of said profile (3) **characterized in that** said device for the simultaneous management of the movement of said heads (2a, 2b, 2c) is configured to translate said metallic profile (3) simultaneously with said movement of said heads (2a, 2b, 2c) in engagement with said working surfaces (5a, 5b, 5c).

2. The machine (1) with working heads according to claim 1, **characterized in that** said device (7) for the translational motion of said metallic profile (3) along the longitudinal axis (A) of said profile (3) comprises a clamp (9) which is adapted to engage said metallic profile (3) for its translational motion.

3. The machine (1) with working heads according to claim 1, **characterized in that** said device (7) for the translational motion of said metallic profile (3) along the longitudinal axis (A) of said profile (3) comprises at least one motorized roller which is adapted to engage said metallic profile (3) for its translational motion.

4. The machine (1) with working heads according to claim 1 or 2 or 3, **characterized in that** it comprises at least one vise with rollers (10, 11, 12, 13) which is adapted to engage said metallic profile (3).

5. The machine (1) with working heads according to at least one of claims 1 to 4, **characterized in that** said device for the simultaneous management of the movement of said heads (2a, 2b, 2c) is configured to translate said metallic profile (3) in discrete steps following the disengagement of said heads (2a, 2b, 2c) from said working surfaces (5a, 5b, 5c).

6. The machine (1) with working heads according to one or more of the preceding claims, **characterized in that** each one of said at least two working heads (2a, 2b, 2c) comprises respectively a tool which is selected from the group that comprises tools for drilling, punching, writing, beveling and milling.

7. A method for working three-dimensional metallic profiles in a machine with working heads, comprising the step of at least two working heads (2a, 2b, 2c) moved simultaneously and independently for the respective working of a different surface (5a, 5b, 5c) of a three-dimensional metallic profile (3) **characterized in that** said step of moving simultaneously at least two working heads (2a, 2b, 2c) comprises simultaneously the step of translational motion of said metallic profile (3) along its own longitudinal axis (A), while the at least two working heads (2a, 2b, 2c) are in engagement with said working surfaces (5a, 5b, 5c).

8. The method according to claim 7, further comprising the steps of:
- disengaging said working heads (2a, 2b, 2c) from said respective surfaces (5a, 5b, 5c);
- locking said metallic profile (3);
- actuating a tool for each one of said heads (2a, 2b, 2c), said tool being selected from the group that comprises tools for drilling, punching, writing, beveling and milling.

## Patentansprüche

1. Eine Maschine (1) mit Arbeitsköpfen zum Bearbeiten dreidimensionaler Metallprofile, die mindestens zwei Arbeitsköpfe (2a, 2b, 2c) umfasst,
eine Vorrichtung für die gleichzeitige Steuerung der Bewegung der Köpfe (2a, 2b, 2c), die geeignet ist, jeden der Köpfe (2a, 2b, 2c) zur entsprechenden Bearbeitung einer anderen Oberfläche (5a, 5b, 5c) des Metallprofils (3) unabhängig und gleichzeitig zu bewegen, und
eine Vorrichtung (7) für die Translationsbewegung des Metallprofils (3) entlang der Längsachse (A) des Profils (3), **dadurch gekennzeichnet, dass** die Vorrichtung zur gleichzeitigen Steuerung der Bewegung der Köpfe (2a, 2b, 2c) ausgebildet ist, um das Metallprofil (3) gleichzeitig mit der Bewegung der Köpfe (2a, 2b, 2c) in Eingriff mit den Arbeitsflächen (5a, 5b, 5c) zu überführen.

2. Die Maschine (1) mit Arbeitsköpfen gemäß Anspruch 1, **dadurch gekennzeichnet, dass** die Vorrichtung (7) für die Translationsbewegung des Metallprofils (3) entlang der Längsachse (A) des Profils (3) eine Klemme (9) umfasst, die ausgebildet ist, um das Metallprofil (3) zum Zwecke seiner Translationsbewegung zu halten.

3. Die Maschine (1) mit Arbeitsköpfen gemäß Anspruch 1, **dadurch gekennzeichnet, dass** die Vorrichtung (7) für die Translationsbewegung des Metallprofils (3) entlang der Längsachse (A) des Profils (3) mindestens eine motorisierte Rolle umfasst, die ausgebildet ist, um das Metallprofil (3) zum Zwecke seiner Translationsbewegung zu halten.

4. Die Maschine (1) mit Arbeitsköpfen gemäß Anspruch 1 oder 2 oder 3, **dadurch gekennzeichnet, dass** sie mindestens einen Schraubstock mit Rollen (10, 11, 12, 13) umfasst, der geeignet ist, das Metallprofil (3) zu halten.

5. Die Maschine (1) mit Arbeitsköpfen gemäß mindestens einem der Ansprüche 1 bis 4, **dadurch gekennzeichnet, dass** die Vorrichtung zur gleichzeitigen Steuerung der Bewegung der Köpfe (2a, 2b, 2c) ausgebildet ist, um das Metallprofil (3) nach dem Lösen der Köpfe (2a, 2b, 2c) von den Arbeitsflächen (5a, 5b, 5c) in diskreten Schritten zu überführen.

6. Die Maschine (1) mit Arbeitsköpfen gemäß einem oder mehreren der obigen Ansprüche, **dadurch gekennzeichnet, dass** jeder der mindestens zwei Arbeitsköpfe (2a, 2b, 2c) ein Werkzeug umfasst, das gewählt ist aus der Gruppe, welche Werkzeuge zum Bohren, Stanzen, Schreiben, Abkanten und Fräsen umfasst.

7. Ein Verfahren zum Bearbeiten dreidimensionaler Metallprofile in einer Maschine mit Arbeitsköpfen, das den Schritt mindestens zweier Arbeitsköpfe (2a, 2b, 2c) umfasst, die gleichzeitig und unabhängig bewegt werden, zur entsprechenden Bearbeitung einer anderen Oberfläche (5a, 5b, 5c) eines dreidimensionalen Metallprofils (3), **dadurch gekennzeichnet, dass** der Schritt des gleichzeitigen Bewegens mindestens zweier Arbeitsköpfe (2a, 2b, 2c) gleichzeitig den Schritt der Translationsbewegung des Metallprofils (3) entlang seiner eigenen Längsachse (A) umfasst, während die mindestens zwei Arbeitsköpfe (2a, 2b, 2c) in Eingriff mit den Arbeitsflächen (5a, 5b, 5c) stehen.

8. Das Verfahren gemäß Anspruch 7, das weiter folgende Schritte umfasst:
- das Lösen der Arbeitsköpfe (2a, 2b, 2c) von den jeweiligen Oberflächen (5a, 5b, 5c);
- das Blockieren des Metallprofils (3);
- das Antreiben eines Werkzeugs für jeden der Köpfe (2a, 2b, 2c), wobei das Werkzeug gewählt ist aus der Gruppe, die Werkzeuge zum Bohren, Stanzen, Schreiben, Abkanten und Fräsen umfasst.

## Revendications

1. Machine (1) avec têtes d'usinage pour usiner des profilés métalliques tridimensionnels, comprenant au moins deux têtes d'usinage (2a, 2b, 2c),
un dispositif pour la gestion simultanée du mouvement desdites têtes (2a, 2b, 2c) qui est adapté pour déplacer chacune desdites têtes (2a, 2b, 2c) indépendamment et simultanément pour l'usinage respectif d'une surface différente (5a, 5b, 5c) dudit profilé métallique (3), et
un dispositif (7) pour le mouvement de translation dudit profilé métallique (3) le long de l'axe longitudinal (A) dudit profilé (3), **caractérisée en ce que** ledit dispositif pour la gestion simultanée du mouvement desdites têtes (2a, 2b, 2c) est configuré pour déplacer en translation ledit profilé métallique (3) simultanément audit mouvement desdites têtes (2a, 2b, 2c) en prise avec lesdites surfaces d'usinage (5a, 5b, 5c).

2. Machine (1) avec têtes d'usinage selon la revendication 1, **caractérisée en ce que** ledit dispositif (7) pour le mouvement de translation dudit profilé métallique (3) le long de l'axe longitudinal (A) dudit profilé (3) comprend un dispositif de serrage (9) qui est adapté pour mettre en prise ledit profilé métallique (3) pour son mouvement de translation.

3. Machine (1) avec têtes d'usinage selon la revendication 1, **caractérisée en ce que** ledit dispositif (7) pour le mouvement de translation dudit profilé métallique (3) le long de l'axe longitudinal (A) dudit profilé (3) comprend au moins un rouleau motorisé qui est adapté pour mettre en prise ledit profilé métallique (3) pour son mouvement de translation.

4. Machine (1) avec têtes d'usinage selon la revendication 1 ou 2 ou 3, **caractérisée en ce qu'**elle comprend au moins un étau avec des rouleaux (10, 11, 12, 13), qui est adapté pour mettre en prise ledit profilé métallique (3).

5. Machine (1) avec têtes d'usinage selon au moins l'une des revendications 1 à 4, **caractérisée en ce que** ledit dispositif pour la gestion simultanée du mouvement desdites têtes (2a, 2b, 2c) est configuré pour déplacer en translation ledit profilé métallique (3) selon des étapes distinctes suite au désengagement desdites têtes (2a, 2b, 2c) desdites surfaces d'usinage (5a, 5b, 5c).

6. Machine (1) avec têtes d'usinage selon une ou plusieurs des revendications précédentes, **caractérisée en ce que** chacune desdites au moins deux têtes d'usinage (2a, 2b, 2c) comprend respectivement un outil qui est choisi dans le groupe comprenant les outils pour le perçage, le poinçonnement, l'écriture, le biseautage et le fraisage.

7. Procédé pour usiner des profilés métalliques tridimensionnels dans une machine dotée de têtes d'usinage, comprenant l'étape dans laquelle au moins deux têtes d'usinage (2a, 2b, 2c) sont déplacées simultanément et indépendamment pour l'usinage respectif d'une surface différente (5a, 5b, 5c) d'un profilé métallique tridimensionnel (3), **caractérisé en ce que** ladite étape de déplacement simultané des au moins deux têtes d'usinage (2a, 2b, 2c) comprend simultanément l'étape de mouvement en translation dudit profilé métallique (3) le long de son propre axe longitudinal (A), alors que les au moins deux têtes d'usinage (2a, 2b, 2c) sont en prise avec lesdites surfaces d'usinage (5a, 5b, 5c).

8. Procédé selon la revendication 7, comprenant en outre les étapes consistant à :
désengager lesdites têtes d'usinage (2a, 2b, 2c) desdites surfaces (5a, 5b, 5c) respectives ;
bloquer ledit profilé métallique (3) ;
actionner un outil pour chacune desdites têtes (2a, 2b, 2c), ledit outil étant choisi dans le groupe qui comprend les outils pour le perçage, le poinçonnement, l'écriture, le biseautage et le fraisage.
